# EUROPÄISCHE PATENTSCHRIFT

(11) **EP 0 525 291 B1**
(45) Veröffentlichungstag und Bekanntmachung des Hinweises auf die Patenterteilung: **11.02.1998**
(21) Anmeldenummer: 92104069.7
(22) Anmeldetag: 10.03.1992
(51) Int. Cl.: B32B 5/10

(54) **Vliesstoff-Laminat mit hohem spezifischen Volumen und guter Festigkeit**
Laminate of non-woven fabrics of high specific volume and having high strength
Etoffe non-tissée stratifiée à grand volume spécifique ayant une bonne résistance

(30) Priorität: 30.07.1991 DE 4125151
(43) Veröffentlichungstag der Anmeldung: 03.02.1993
(73) Patentinhaber: Firma Carl Freudenberg, 69469 Weinheim (DE)
(72) Erfinder: Assent, Hans Claus, W-6940 Weinheim (DE); Knoke, Jürgen, Dr., W-6940 Weinheim (DE); Jöst, Manfred, W-6944 Hemsbach (DE)

(56) Entgegenhaltungen:
- EP-A- 0 053 188
- DE-A- 2 453 675
- DE-A- 3 605 830
- GB-A- 1 414 762
- US-A- 3 616 134
- US-A- 3 669 823
- US-A- 3 719 546
- US-A- 3 775 231

## Beschreibung

Im Einlagebereich für Bekleidungsstücke haben sich in den letzten Jahren mehr und mehr Vliesstoffe mit Fadenverstärkung durchgesetzt, die entweder in Kettrichtung oder in Kett-/Kurzschuß- oder in Kett-/Schuß- Richtung erfolgt.

Einlagevliesstoffe für Bekleidungsstücke mit Fadenverstärkung in Kett-Schuß-Richtung sind in EP-A-0 119 754 beschrieben. Die Veröffentlichung CHEMIEFASERN/TEXTIL-INDUSTRIE 39, 91 (Mai 1989), 5124, beschreibt die zugehörige Technologie. In beiden Veröffentlichungen findet sich jedoch kein Hinweis auf Laminate, die aus einem Füllvliesstoff ohne Fadenverstärkung und mit einer Rohdichte unterhalb 0,025 cm³ und aus einem fadenverstärkten Vliesstoff mit einer Rohdichte (ohne Verstärkung) oberhalb 0,035 g/cm³ bestehen.

Insbesondere bei Kettverstärkung wird durch die Erhöhung der Festigkeit und Verminderung der Dehnung in einer Richtung der Anwendungsbereich normaler Vliesstoffe vergrößert.

Beispielsweise ist dies von Bedeutung als Bundeinlage, bei der in der Richtung des Bundes eine hohe Festigkeit und eine kurze Dehnung notwendig sind. Ein ähnlicher Anwendungsbereich für Einlagestoffe ist in der Kante von Wollmänteln gegeben, wo ein Vliesstoff grundsätzlich positiv ist (u.a. geringe Rückvernietung, relativ gutes Volumen bei geringem Gewicht), wo aber die Festigkeit in der Kantenrichtung bei einem normalen Vliesstoff nicht ausreicht und die Verstärkung mit Kettfäden seinen Einsatz erst ermöglicht.

Auch Kett/Kurzschuß- und Kett/Schuß-Verstärkung eines Vliesstoffes sind für andere Einsatzzwecke von Interesse.

Die Festigkeit in einer Richtung ist vor allen Dingen im Plackbereich als Plackverstärkung interessant, aber auch für normale Füllvliesstoffe in Anoraks, Winterbekleidung etc. zeichnen sich solche Materialien, verglichen mit einfachen Füllvliesstoffen, durch anwendungstechnische Vorteile aus.

DE-A-3 605 830 offenbart einen Schichtstoff als Trägerbahn für Dach- und Dichtungsbahnen, aus welchem Bitumen-Bahnen hergestellt werden können. Er besteht aus einem vorverfestigtem Synthesefaservlies und einem vorverfestigtem Mineralfaservlies, welche durch Vernadelung miteinander verbunden sind. Dabei soll das Mineralfaservlies längslaufende Verstärkungsgarne aus einem mineralischen Werkstoff enthalten, um die Dimensionsänderung der Trägerbahn in Längs- und Querrichtung, insbesondere letztere, deutlich unter 0,2 bis 0,5% zu drücken, um noch mehr Sicherheit beim Einsatz als Trägerbahn für einlagige Dachbahnen zu erhalten. Dabei ist die Verwendung eines vorverfestigten Mineralfaservlieses, das in Längsrichtung mineralische Verstärkungsgarne enthält, Voraussetzung. Besonderer Wert wird auch auf die Dimensionsänderung bei 80°C gelegt, da solche Temperaturschwankungen auf dem Dach charakteristisch sind. Parallele Verstärkungsgarne aus Glas verbessern dabei diese thermomechanischen Eigenschaften. Überraschenderweise ist die Verbesserung der Dimensionsstabilität in Querrichtung deutlich ausgeprägter als in Längsrichtung.

Grundsätzlich wird bei der Kett- und Kett/Schuß- sowie Kett/Kurzschuß-Verstärkung eine eklatante Verminderung des Volumens der Füllvliesstoffe beobachtet, was gleichzeitig ihre Dichte erhöht. Dies ist für eine Reihe von Anwendungsgebieten ohne Bedeutung. Grundsätzlich birgt dies zwei gravierende Nachteile in sich:
1) Durch die Volumenverminderung braucht man mehr Fasern, um ein gleiches Volumen zu erzeugen (signifikante Kostensteigerung).
2) Dicke Füllvliesstoffe sind überhaupt nicht mehr über 1 cm kettverstärkbar, weil das mit den herkömmlichen Maschinen nicht gelingt.

Die Aufgabe der vorliegenden Erfindung besteht darin, ein sehr voluminöses und dennoch fadenverstärktes Vliesstoff-Laminat, enthaltend einen Füllvliesstoff, zu schaffen, welches als Plackverstärkungs-Einlage, als Füllvliesstoff in Anoraks und Winterbekleidung, als Fixiereinlage für Bekleidungsstücke und als Füllung von Bettenmaterial dient. Dabei soll die Fadenverstärkung eine hohe Festigkeit in der Kettrichtung oder auch in Kett- und Schußrichtung erzielen, ohne die bisher beobachtete Verminderung des Laminat-Volumens. Dieses hohe Volumen soll durch möglichst wenig Fasereinsatz erzielt werden.

Die Lösung dieser Aufgabe besteht in einem Vliesstoff-Laminat als Volumen- und Verstärkungseinlage für Bekleidungsstücke und als Füllung von Bettenmaterial gemäß den Merkmalen des ersten Patentanspruchs. Vorteilhafte Ausgestaltungen sind in den Unteransprüchen aufgezeigt.

Das Laminat besteht aus einem Füllvliesstoff mit geringem spezifischem Volumen und aus einem fadenverstärkten Vliesstoff. Es besitzt eine Gesamtdicke von mehr als zwei mm, wobei die Obergrenze durch die Bedürfnisse des Anwenders bestimmt werden kann.

Der Füllvliesstoff selbst besitzt eine Rohdichte unterhalb 0,025 g/cm³ und eine Dicke oberhalb 1,6 mm, wobei die noch zu verarbeitende Obergrenze bei 60 mm liegen wird.

Der Füllvliesstoff enthält keine Fadenverstärkung. Er ist laminiert mit einem fadenverstärkten Vliesstoff, der sich zusammensetzt aus 10 - 60 g/m² Vliesstoff mit einer Rohdichte über 0,035 g/cm³ und aus 3 - 100 g/m² Fadenverstärkung. Bei diesem Laminat kann die Fadenverstärkung sowohl zum Inneren des Laminat-Querschnitts als auch nach außen zeigen.

Da gemäß der Aufgabenstellung auf hohes Volumen geachtet werden muß, ist es selbstverständlich, daß die Laminierung so durchgeführt wird, daß möglichst keine Volumenverminderung eintritt. Dem Fachmann ist bekannt, zu diesem Zwecke so vorzugehen, daß die Schichten in der Heizzone nicht mit Druck, sondern auf Spalt laminiert werden.

Das auf diese Weise hergestellte Laminat kann ohne außenseitige Haftmasse eingesetzt werden, kann aber auch außen auf der Seite des fadenverstärkten Vliesstoffes noch zusätzlich eine punktförmig aufgetragene Haftmasse haben, um als Fixiereinlage auf eine Oberstoff-Innenseite aufgeschweißt werden zu können.

Die Laminierung der beiden Vliesstoffe muß so erfolgen, daß das Volumen erhalten bleibt. Hierzu kann man den fadenverstärkten Vliesstoff füllvliesstoffseitig punktförmig mit einem Schmelzkleber versehen, flächenförmig mit Puder bestreuen oder ein luftdurchlässiges Klebenetz auflegen. In allen diesen Fällen bietet sich beispielsweise eine Durchlaufpresse an, bei der möglichst drucklos die Verfestigung erfolgt.

Andere Möglichkeiten sind der Einsatz von Hochfrequenz oder von heißen Nadeln, die durch den dünnen, verstärkten Vliesstoff bis zur Oberfläche des Füllvliesstoffes durchdringen. In den letztgenannten Fällen müssen die eingesetzten Fasern vom Füllvliesstoff und fadenverstärkten Vliesstoff natürlich thermoplastisch sein.

Materialien dieser Art können bevorzugt im Einlagesektor für Bekleidung Anwendung finden. Sie bieten aber auch Einsatzmöglichkeiten bei der Füllung von Bettenmaterial und sind vorteilhaft in der Kombination von Volumen und Festigkeit.

Im Einlagebereich ist an und für sich schon der Einsatz von Charmeuse als Abdeckung von Füllvliesstoffen zur Verbesserung der Fasermigration bekannt.

Das hier beschriebene Laminat bietet aber gegenüber dieser Kombination folgende Vorteile:
1) Die Stabilität in der Richtung der Fadenverstärkung ist größer als bei dem Einsatz von Charmeuse.
2) Die Fasermigration einer offenen Charmeuse-Abdeckung wird nach einer Reihe von durchgeführten Tests nur teilweise gegenüber dem abgedeckten Füllvliesstoff verbessert, während der fadenverstärkte Vliesstoff infolge der Tatsache, daß keine Löcher vorhanden sind, einen wesentlich besseren Schutz bietet.

Für die Kombination von Weichheit, Festigkeit sowie geringer Fasermigration kann es in Einzelfällen erwünscht sein, einen voluminösen Füllvliesstoff zweiseitig mit einem fadenverstärkten dünnen Vliesstoff abzudecken, oder auch auf der einen Seite mit einem fadenverstärkten und auf der anderen Seite mit einem nicht fadenverstärkten Vliesstoff.

In jedem dieser Fälle ist jedoch ebenfalls ein erfindungsgemäßes Laminat aus einem Füllvliesstoff ohne Fadenverstärkung und aus einem fadenverstärkten Vliesstoff gemäß dem Hauptanspruch vorhanden, welches allein zur Lösung der gestellten Aufgabe beiträgt, bei anisotropem Festigkeitsverlauf im Laminat dessen Volumen zu erhalten.

### Beispiel:

Ein Füllvliesstoff wird auf folgende Art hergestellt: 100 g/m² Polyesterfasern 3,3 dtex werden mit Querkrempeln gelegt und beidseitig mit je 8 g/m² (fest) eines Polyacrylat-Binders mit Methylolacrylamid-Gruppen besprüht, getrocknet und der Binder bei 160°C kondensiert. Dieser Füllvliesstoff wird aufgewickelt. Er hat eine Dicke von ca. 13 mm, gemessen nach DIN 53 855, Teil 2.

Ein fadenverstärkter Vliesstoff wird folgendermaßen hergestellt:
25 g/m² eines 100 % Nylon 6 - Vlieses werden mit Querkrempeln gelegt und mit einem Punktschweißkalander bei 200°C zu einem Vliesstoff verfestigt. Dieser Vliesstoff wird aufgerollt und anschließend mit 12 g/m² eines Copolyester-Schmelzklebers punktförmig beschichtet. Dieser Vliesstoff wird mit Kettfäden in der bekannten Art so verstärkt, daß Polyester-Fäden 50f22 in einer Dichte von ca. 3,6/cm eingeschossen werden. Dieser Vliesstoff wird mit einem Copolyester-Schmelzkleber einseitig punktförmig mit 12 g/m² bedruckt.

Beide auf diese Art hergestellten Vliesstoffe werden auf einer Meyer-Durchlaufpresse so miteinander laminiert, daß der fadenverstärkte Vliesstoff mit der Haftmassenseite auf die Füllvliesstoffseite zu liegen kommt.

Die Temperatur auf der Seite des fadenverstärkten Vliesstoffes beträgt 160°C, die auf der Seite des Füllvliesstoffes 180°C, die Geschwindigkeit ist 10 m/min. Die Heizzone hat eine Länge von ca. 2,5.

Die Schichten werden nicht mit Druck, sondern auf Spalt laminiert, um das Gesamtvolumen bei Fixierprozeß möglichst zu erhalten.

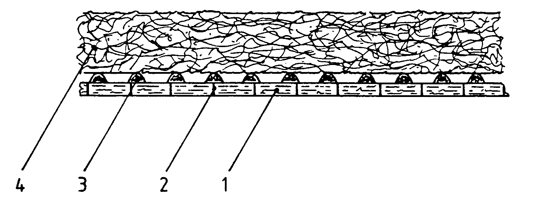

Die Figur zeigt im Querschnitt eine beispielhafte Ausgestaltung des erfindungsgemäßen Laminats, wobei mit 1 der Basisvliesstoff, mit 2 die Kettverstärkung, mit 3 die Haftmasse (punktförmig aufgetragen) und mit 4 der Füllvliesstoff bezeichnet ist.

## Patentansprüche

1. Vliesstoff-Laminat als Volumen- und Verstärkungseinlage für Bekleidungsstücke und als Füllung von Bettenmaterial, bestehend aus einem Füllvliesstoff ohne Fadenverstärkung mit geringem spezifischem Volumen und aus einem fadenverstärkten Vliesstoff, wobei das Laminat eine Gesamtdicke von mehr als 2 mm mit beliebiger Obergrenze besitzt, wobei dar Füllvliesstoff eine Rohdichte unterhalb 0,025 g/cm³ und eine Dicke von 1,6 mm - 60 mm hat und wobei ein fadenverstärkter Vliesstoff aus 10 - 60 g/m² Vliesstoff mit einer Rohdichte oberhalb 0,035 g/cm³ und aus 3 - 100 g/m² Fadenverstärkung auf den Füllvliesstoff auflaminiert ist.

2. Vliesstoff-Laminat nach Anspruch 1, dadurch gekennzeichnet, daß es als Fixiereinlage dient und auf der Seite des fadenverstärkten Vliesstoffs außenseitig eine punkt- oder flächenmäßig aufgetragene Haftmasse besitzt.

3. Vliesstoff-Laminat nach Anspruch 1 oder 2, dadurch gekennzeichnet, daß die Fadenverstärkung nur in Kettrichtung ausgebildet ist.

4. Vliesstoff-Laminat nach Anspruch 1 oder 2, dadurch gekennzeichnet, daß die Vliesstoff-Schichten durch punktförmig aufgetragenen Schmelzkleber miteinander verbunden sind.

5. Vliesstoff-Laminat nach Anspruch 1 oder 2, dadurch gekennzeichnet, daß die Vliesstoff-Schichten durch flächig aufgetragenes Schmelzkleber-Puder miteinander verbunden sind.

6. Vliesstoff-Laminat nach Anspruch 1 oder 2, dadurch gekennzeichnet, daß die Vliesstoff-Schichten durch ein bei niedriger Temperatur schmelzendes Klebenetz miteinander verbunden sind.

7. Vliesstoff-Laminat nach Anspruch 1 oder 2, dadurch gekennzeichnet, daß die Vliesstoff-Schichten aus thermoplastischen Fasern bestehen und miteinander verschweißt sind.

8. Vliesstoff-Laminat nach Anspruch 7, dadurch gekennzeichnet, daß die Vliesstoff-Schichten über ihren gesamten Querschnitt miteinander heiß vernadelt sind.

## Claims

1. A nonwoven laminate for use as bulking and reinforcing interlining for garments and as infill of bedding material, comprising a filling nonwoven which has no thread reinforcement and a low specific volume and a thread-reinforced nonwoven, the laminate having a total thickness of more than 2 mm with no specified upper limit, the filling nonwoven having a density below 0.025 g/cm³ and a thickness of 1.6 mm - 60 mm, and the filling nonwoven being laminated with a thread-reinforced nonwoven composed of a 10 - 60 g/m² nonwoven having a density above 0.035 g/cm³ and of a 3 - 100 g/m² thread reinforcement.

2. A nonwoven laminate according to claim 1, characterized in that it is used as a fusible interlining and has an adhesive composition on the outside of the thread-reinforced nonwoven side, the adhesive composition having been applied spotwise or areawise.

3. A nonwoven laminate according to claim 1 or 2, characterized in that the thread reinforcement extends only in the warp direction.

4. A nonwoven laminate according to claim 1 or 2, characterized in that the nonwoven layers are held together by a hotmelt adhesive, the hotmelt adhesive having been applied spotwise.

5. A nonwoven laminate according to claim 1 or 2, characterized in that the nonwoven layers are held together by a hotmelt adhesive powder, the hotmelt adhesive powder having been applied areawise.

6. A nonwoven laminate according to claim 1 or 2, characterized in that the nonwoven layers are held together by an adhesive net, the adhesive net having a low melting point.

7. A nonwoven laminate according to claim 1 or 2, characterized in that the nonwoven layers comprise thermoplastic fibres and have been welded together.

8. A nonwoven laminate according to claim 7, characterized in that the nonwoven layers have been needled together over their entire cross-section using hot needles.

## Revendications

1. Etoffe non-tissée stratifiée en tant que garniture donnant du volume et servant au renforcement pour des vêtements et en tant que rembourrage pour des articles de literie, formée par une étoffe non-tissée de rembourrage sans renforcement des fils ayant un faible volume spécifique et par une étoffe non-tissée renforcée par des fils, l'étoffe stratifiée ayant une épaisseur totale supérieure à 2 mm présentant une limite supérieure quelconque, l'étoffe non-tissée de rembourrage ayant une masse volumique apparente inférieure à 0,025 g/cm³ et une épaisseur de 1,6 mm - 60 mm, et une étoffe non-tissée renforcée par des fils formée par une étoffe tissée de 10 - 60 g/m² présentant une masse volumique apparente supérieure à 0,035 g/cm³ et par des fils de renforcement représentant 3 - 100 g/m² étant laminée sur l'étoffe non-tissée de rembourrage.

2. Etoffe non-tissée stratifiée selon la revendication 1, caractérisée en ce qu'elle sert de garniture de fixation et possède, sur le côté de l'étoffe non-tissée renforcée par des fils, sur le côté extérieur, une masse adhésive appliquée de manière ponctuelle ou sur toute la surface.

3. Etoffe non-tissée stratifiée selon la revendication 1 ou 2, caractérisée en ce que le renforcement par fils est réalisé seulement dans le sens de la chaîne.

4. Etoffe non-tissée stratifiée selon la revendication 1 ou 2, caractérisée en ce que les couches d'étoffe non-tissée sont reliées les unes aux autres par une colle à fusion appliquée de manière ponctuelle.

5. Etoffe non-tissée stratifiée selon la revendication 1 ou 2, caractérisée en ce que les couches d'étoffe non-tissée sont reliées les unes aux autres par une colle à fusion pulvérulente appliquée en nappe.

6. Etoffe non-tissée stratifiée selon la revendication 1 ou 2, caractérisée en ce que les couches d'étoffe non-tissée sont reliées les unes aux autres par un réseau de colle fondant à basse température.

7. Etoffe non-tissée stratifiée selon la revendication 1 ou 2, caractérisée en ce que les couches d'étoffe non-tissée sont formées par des fibres thermoplastiques et sont soudées les unes aux autres.

8. Etoffe non-tissée stratifiée selon la revendication 7, caractérisée en ce que les couches d'étoffe non-tissée sont aiguilletées à chaud les unes avec les autres sur toute leur section transversale.
